# EUROPEAN PATENT SPECIFICATION

(11) **EP 3 643 447 B1**
(45) Date of publication and mention of the grant of the patent: **19.05.2021**
(21) Application number: 18203008.0
(22) Date of filing: 28.10.2018
(51) Int. Cl.: B23Q 11/08, B23Q 1/26, F16C 29/08, F16C 29/02

(54) **LOW DUST LINEAR MODULE**
STAUBARMES LINEARMODUL
MODULE LINÉAIRE À FAIBLE POUSSIÈRE

(43) Date of publication of application: 29.04.2020
(73) Proprietor: Hiwin Technologies Corp., Taichung City 40852 (TW)
(72) Inventor: HUNG, Ciao-Cun, 40852 Taichung City (TW); TSAI, Meng-Lung, 40852 Taichung City (TW); PENG, Tsung-Wen, 40852 Taichung City (TW)
(74) Representative: Lang, Christian

(56) References cited:
- CN-U- 203 756 740
- CN-U- 204 322 078
- TW-B- I 611 119
- TW-U- M 550 353

## Description

### BACKGROUND

### Field of the Invention

The present invention relates to a linear module, and more particularly to a low dust linear module.

### Related Prior Art

The general linear module includes a rail seat, a slide table disposed on the rail seat, and a dustproof belt disposed between the rail seat and the slide table. The dust-proof belt is used to prevent the tiny particles generated when the slide table moves from being scattered to the workplace to meet the working environment standard, and the dust-proof belt can also prevent the dust in the workplace from falling into the rail seat, thereby affecting the operation of the linear module.

Document CN 203 756 740 U teaches a low dust linear module as defined in the preamble of claim 1. More specifically, it relates to a sliding table being installed to a track base, said sliding table including a sliding base, an upper cover, a plurality of magnetic elements and a dustproof belt.

Referring to Fig. 1A, which is one of the drawings of the Taiwan Patent No. 1530627, showing a slide table 111 suitable for a linear module, wherein a magnetic member 113 is mounted at both ends of a slide seat 112 of the slide table 111 for magnetically attracting a dustproof belt 114, so that the dustproof belt 114 on the slide seat 112 is convexly raised and attached to the top surface of the slide table 111, thereby achieving excellent dustproof effect, having the advantages of simple structure and easy installation.

However, since the magnetic members 113 at both ends of the slide seat112 magnetically attract the dustproof belt 114 during the displacement of the slide table 111, and the magnetic members 113 and the dustproof belt 114 are kept in contact with each other. When the slide table 111 moves, each of the magnetic members 113 will rub against the dustproof belt 114 to generate dust, and finally the dust will fall into the slide table 111 to affect the operation of the linear module.

Referring to Fig. 1B, which is one of the drawings of the Taiwan Patent No. M319110, showing a slide table suitable for a linear module, wherein a rail 121 and a slide seat 122 are coated with a magnetic layer, and a cover 123 is disposed on the upper side of the slide seat 122. A spring piece 124 is respectively fixed on two sides of the bottom surface of the cover 123. The bottom surface of each of the spring piece 124 is coated with a Teflon layer, and a steel strip 125 is fixed on the rail 121 and sandwiched between the slide seat 122 and the cover 123, so that the steel strip 125 can completely cover the rail 121, preventing dust in the workplace from entering the inside of the rail 121, affecting the normal operation of the linear module, and preventing the tiny particles generated when the slide seat 122 moves from scattering into the workplace, so as to meet the working environment standards of the clean room.

However, the slide seat122 is magnetically attracted to the steel strip 125 by the magnetic layer, and the two are kept in contact, and the spring piece 124 on the bottom surface of the cover 123 is abutted against the steel strip 125. Therefore, when the slide seat 122 moves, the slide seat 122 and the spring piece 124 will rub against the steel strip 125 to generate dust and tiny particles, and finally the dust will fall into the rail 121 to affect the operation of the linear module. Besides, the tiny particles will flow into the workplace and affect the working environment. Secondly, both the rail 121 and the slide seat 122 must be formed with a magnetic layer by coating or attaching, and the bottom surface of the spring piece 124 has to be formed with a Teflon layer, thereby the processing cost is high.

Referring to Fig. 1C, which is one of the drawings of the Japanese patent No. JP-A-2011-21745, showing a slide table suitable for a linear module, which is mainly provided with a magnet 132 disposed on a side cover 131 to magnetically contact both sides of a sealing strip 133 to achieve a sealing effect, and an elastic pressing member 135 is disposed in an end cover 134, so that the end cover 134 is elastically pressed against the sealing strip 133 via the elastic pressing member 135 to make the sealing effect better.

However, when the slide seat moves, the elastic pressing member 135 will rub against the sealing strip 133 to generate dust and tiny particles, and finally the dust will fall into the rail 136 to affect the operation of the linear module. Besides, the tiny particles will flow into the workplace and affect the working environment.

The present invention has arisen to mitigate and/or obviate the afore-described disadvantages.

### SUMMARY

One objective of the present invention is to provide a low dust linear module capable preventing the generation of dust or fine particles due to friction, so that the linear module can operate normally and maintain the standard of the working environment.

To achieve the above objective, a low dust linear module according to Claim 1 is provided.

The present invention can at least achieve the following effects:
The two magnetic members are respectively disposed at the two slide seat end portions of the slide seat, the first magnetic attraction gap is defined between the magnetic attraction area and a corresponding one of the magnetic members, and the second magnetic attraction gap is defined between the magnetic attraction area and the slide seat cover. When the dustproof strip passes through and are magnetically attracted by the magnetic members, a gap will appear between the magnetic members and the slide seat and the slide seat cover, so that the magnetic members and the dustproof strip are kept in a gap without friction, so as to avoid the generation of dust or fine particles due to friction, so that the linear module can operate normally and maintain the standard of the working environment.

Preferably, the magnitudes of the first magnetic attraction gap are related to the size of the magnetic attraction area, the magnetic attraction force, and the magnetic flux density of the magnetic members, thereby being applicable to linear modules of various dimensions and ensuring that there are the first magnetic attraction gap between the magnetic attraction area and a corresponding one of the magnetic members, and a second magnetic gap between the magnetic attraction area and the slide seat cover.

Preferably, a magnetic attraction force of each of the magnetic members is between 22,6 N and 54,9 N (2,3 and 5,6 kgf), a magnetic flux density is between 3900 and 4100 Gauss, a magnetic surface of each of the magnetic members has a rectangular shape, a length and a width of the magnetic surface are between 10 mm × 10 mm and 12 mm × 12 mm, and the first magnetic attraction gap is between 0.1 and 0.8 mm, thereby ensuring that there are the first magnetic attraction gap between the magnetic attraction area and a corresponding one of the magnetic members, and the second magnetic attraction gap between the magnetic attraction area and the slide seat cover.

Preferably, a magnetic attraction force of each of the magnetic members is between 22,6 N and 54,9 N (2,3 and 5,6 kgf), a magnetic flux density is between 3900 and 4100 Gauss, a magnetic surface of each of the magnetic members has a circular shape, a diameter of the magnetic surface is between 10 mm and 18 mm, and a thickness of each of the magnetic members is 3 mm to 5 mm, thereby ensuring that there are the first magnetic attraction gap between the magnetic attraction area and a corresponding one of the magnetic members, and the second magnetic attraction gap between the magnetic attraction area and the slide seat cover.

Preferably, the rail unit includes a rail and two side covers, the two side covers are disposed at two sides of the rail, and each include a longitudinal portion disposed at two sides of the rail and a transverse portion connected to the longitudinal portion, and a space is defined between the two transverse portions for receiving the dustproof strip.

Preferably, each of the transverse portions is provided with a support groove, and a magnetic strip is disposed in each of the support grooves to magnetically attract two sides of the magnetic attraction section of the dustproof strip, so that the magnetic attraction section of the dustproof strip is sealed between the two side covers.

Preferably, the slide seat further includes an intermediate protrusion portion disposed between the two slide seat end portions, and two slide seat side walls formed on two sides of the intermediate protrusion portion, a slide seat groove is defined between the two slide seat side walls, the magnetic attraction section of the dustproof strip is inserted through the slide seat groove, and a part of the magnetic attraction section of the dustproof strip inserted in the intermediate protrusion portion protrudes upward.

Preferably, there are two said magnetic members which are respectively disposed at the two slide seat end portions of the slide seat.

Preferably, a top surface of each of the magnetic members is lower than a top surface of the transverse portion of each of the side covers.

These together with other objects of the invention, along with the various features of novelty which characterize the invention, are pointed out with particularity in the claims annexed to and forming a part of this disclosure. For a better understanding of the invention, its operating advantages and the specific objects attained by its uses, reference should be had to the accompanying drawings and descriptive matter in which there are illustrated preferred embodiments of the invention.

### BRIEF DESCRIPTION OF THE DRAWINGS

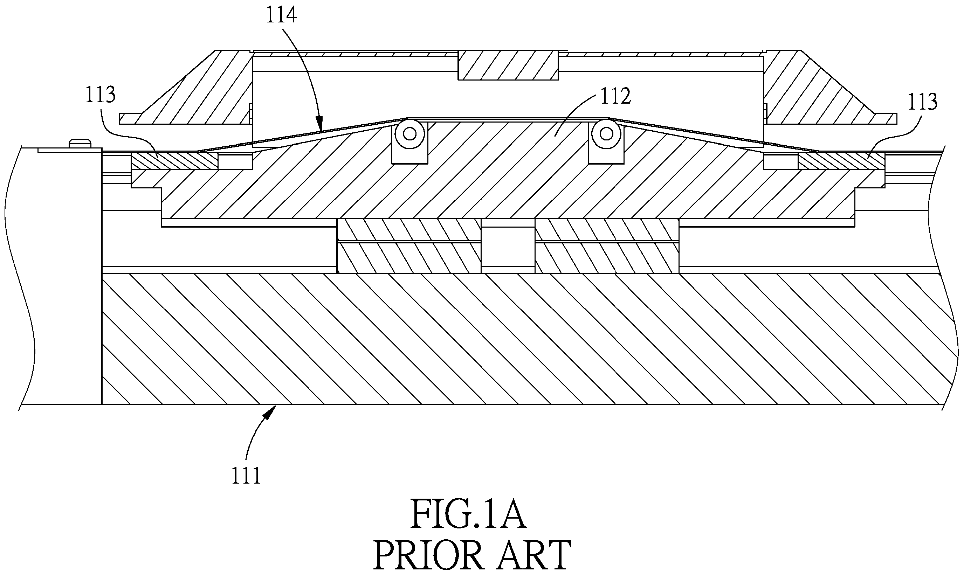

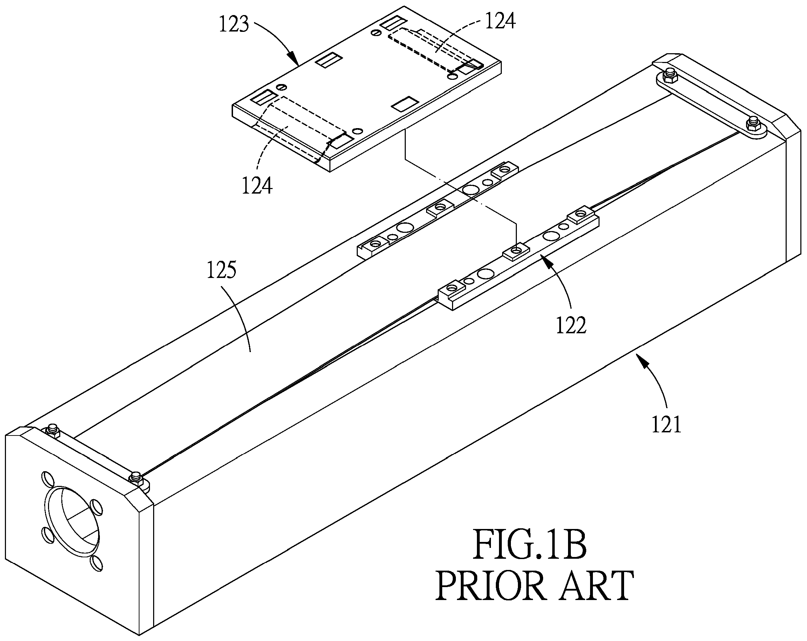

Fig. 1A is one of the drawings of the Taiwan Patent No. 1530627;
Fig. IB is one of the drawings of the Taiwan Patent No. M319110;

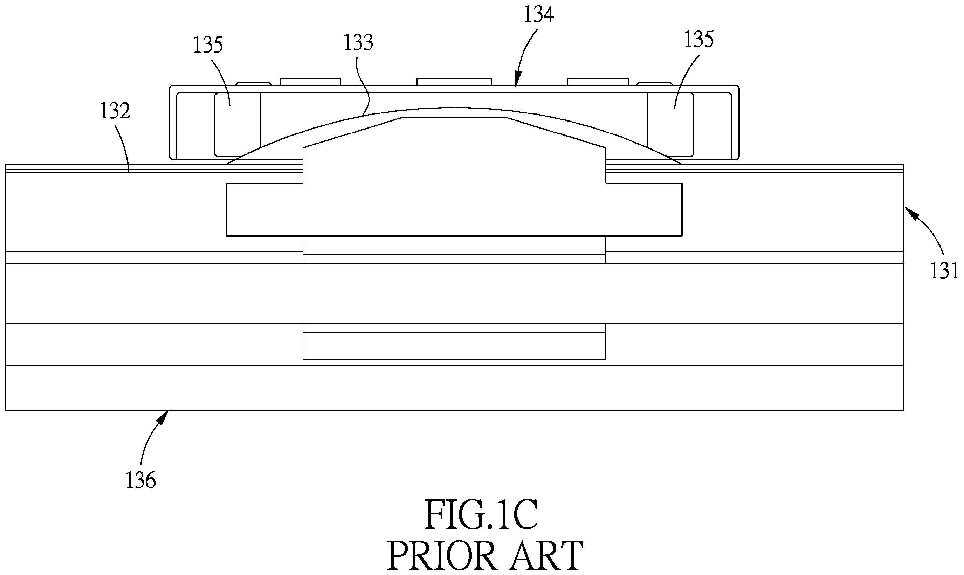

Fig. 1C is one of the drawings of the Japanese patent No. JP-A-2011-21745;
Fig. 2 is a perspective view of a low dust linear module in accordance with a preferred embodiment of the present invention;
Fig. 3 is an exploded view of the low dust linear module in accordance with the preferred embodiment of the present invention;
Fig. 4 is a cross sectional view taken along the line 4-4 of Fig. 3;
Fig. 5 is a magnified view of a part of Fig. 4;
Fig. 6 is a cross sectional view of the low dust linear module in accordance with the preferred embodiment of the present invention; and
Fig. 7 is a magnified view of Fig. 6.

### DETAILED DESCRIPTION

The present invention will be clearer from the following description when viewed together with the accompanying drawings, which show, for purpose of illustrations only, the preferred embodiment in accordance with the present invention.

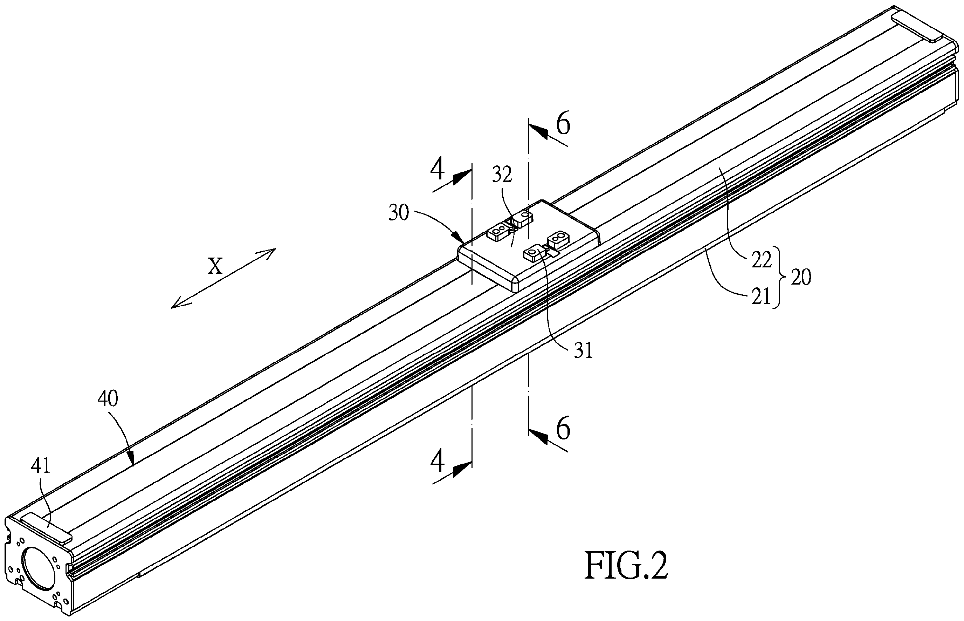

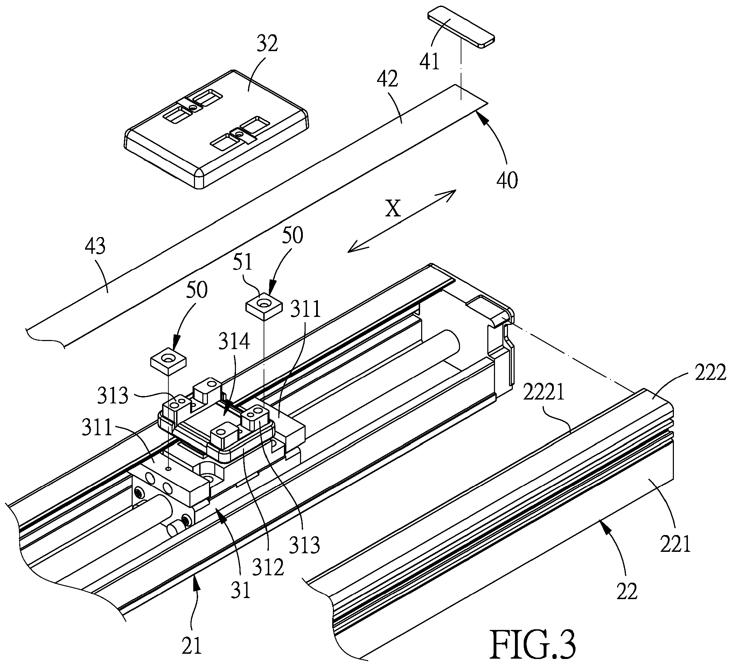

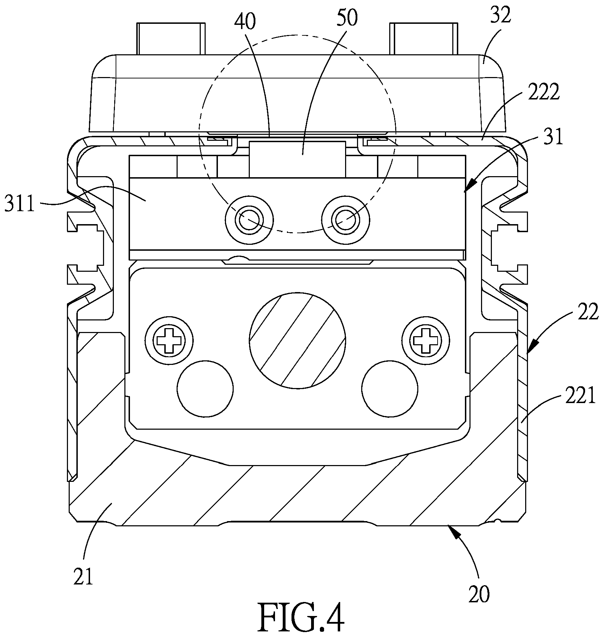

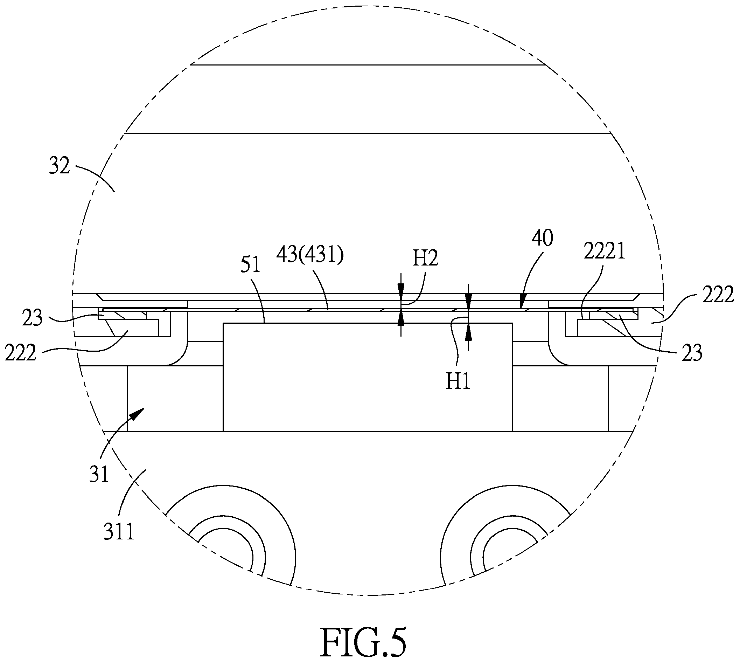

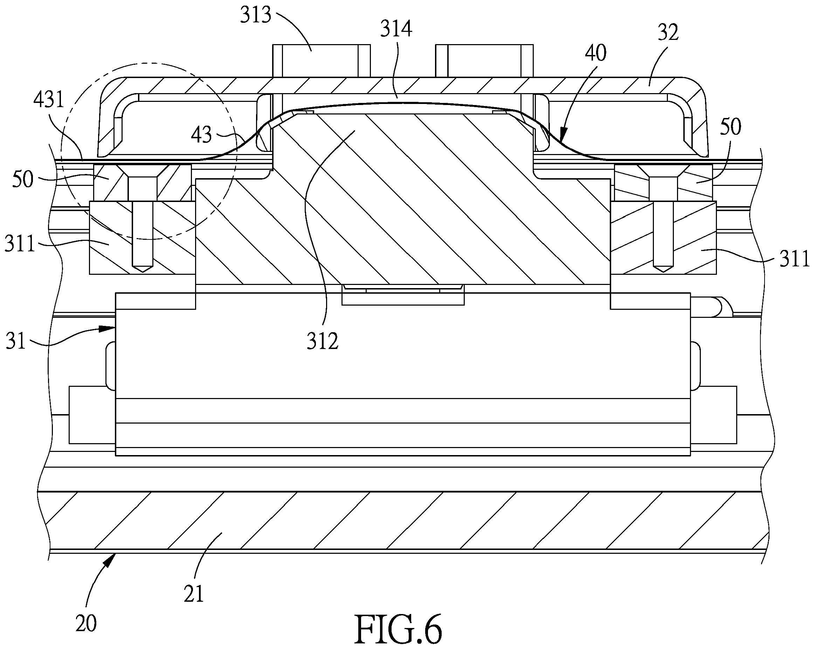

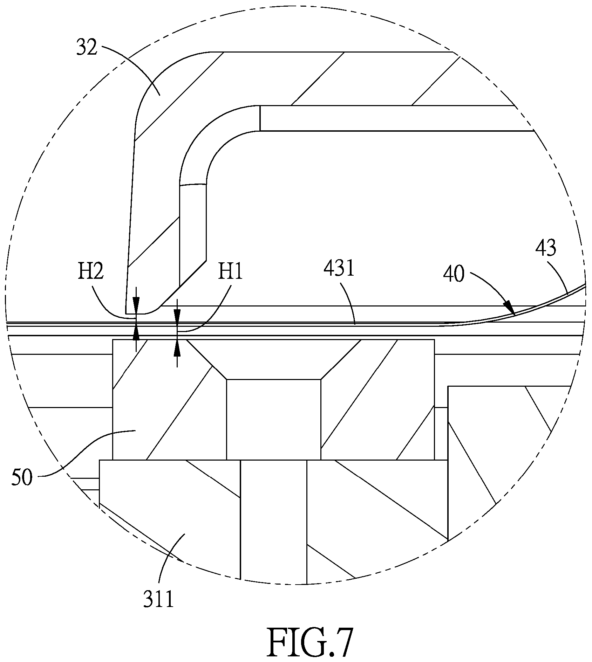

Referring to Figs. 2-7, a low dust linear module in accordance with a preferred embodiment of the present invention comprises: a rail unit 20, a slide seat assembly 30, a dustproof strip 40, and two magnetic members 50.

The rail unit 20 includes a rail 21 and two side covers 22. The rail 21 includes a displacement direction X and two rail ends 211 disposed along the displacement direction X. The two side covers 22 are disposed at two sides of the rail 21, and each include a longitudinal portion 221 disposed at two sides of the rail 21 and a transverse portion 222 connected to the longitudinal portion 221. A space 223 is defined between the two transverse portions 222, each of the transverse portions 222 is provided with a support groove 2221, and in each of the support grooves 2221 is disposed a magnetic strip 23.

The slide seat assembly 30 includes a slide seat 31 and a slide seat cover 32. The slide seat 31 is slidably disposed in the rail 21 along the displacement direction X, and has two slide seat end portions 311 disposed along the displacement direction X, an intermediate protrusion portion 312 disposed between the two slide seat end portions 311, and two slide seat side walls 313 formed on the two sides of the intermediate protrusion portion 312. A slide seat groove 314 is defined between the two slide seat side walls 313. The slide seat cover 32 is disposed on the slide seat 31.

The dustproof strip 40 is made of a magnetic material, such as steel, and includes: two end portions 42 fixed to the two rail ends 211 by a pressing plate 41, and a magnetic attraction section 43 disposed between the two end portions 42 and inserted between the slide seat 31 and the slide seat cover 32. In this embodiment, the magnetic attraction section 43 of the dustproof strip 40 is inserted through the slide seat groove 314, and a part of the magnetic attraction section 43 of the dustproof strip 40 inserted in the intermediate protrusion portion 312 protrudes upward, and the rest part of the magnetic attraction section 43 that is not inserted in the intermediate protrusion portion 312 has two lateral edges magnetically attracted by the magnetic strips 23 disposed in the two support grooves 2221 of the side covers 22, so that the magnetic attraction section 43 of the dustproof strip 40 is sealed between the two side covers 22.

The two magnetic members 50 are disposed on a side of the slide seat 31 facing the dustproof strip 40. It is worth mentioning that the two magnetic members 50 are respectively disposed at the two slide seat end portions 311 of the slide seat 31 to magnetically attracts the magnetic attraction section 43 of the dustproof strip 40, and a top surface of each of the magnetic members 50 is lower than a top surface of the transverse portion 222 of each of the side covers 22. A portion of the magnetic attraction section 43 to be magnetically attracted by the magnetic members 50 is defined as a magnetic attraction area 431. A first magnetic attraction gap HI is defined between the magnetic attraction area 431 and a corresponding one of the magnetic members 50, and a second magnetic attraction gap H2 is defined between the magnetic attraction area 431 and the slide seat cover 32. In this embodiment, the material of each of the magnetic members 50 is neodymium magnet, but it is not limited thereto, and may be a neodymium iron boron magnet.

What mentioned above are the structural configurations of the present invention and their connection relations. Accordingly, the present invention can at least achieve the following effects:
Avoid the generation of dust or tiny particles due to friction. The two magnetic members 50 are respectively disposed at the two slide seat end portions 311 of the slide seat 31, the first magnetic attraction gap HI is defined between the magnetic attraction area 431 and a corresponding one of the magnetic members 50, and the second magnetic attraction gap H2 is defined between the magnetic attraction area 431 and the slide seat cover 32. When the dustproof strip 40 passes through and are magnetically attracted by the magnetic members 50, a gap will appear between the magnetic members 50 and the slide seat 31 and the slide seat cover 32, so that the magnetic members 50 and the dustproof strip 40 are kept in a gap without friction, so as to avoid the generation of dust or fine particles due to friction, so that the linear module can operate normally and maintain the standard of the working environment.

It should be noted that, in this embodiment, each of the magnetic members 50 has a rectangular shape, but is not limited thereto, and may be a circular shape, a circular arc shape, a half moon shape, or the like. In this embodiment, a magnetic surface 51 of each of the magnetic members 50 has a rectangular shape, and the length and width of the magnetic surface 51 are between 10 mm×10 mm and 12 mm×12 mm, the magnetic attraction force of each of the magnetic members 50 is between 22,6 N and 54,9 N (2,3 and 5,6 kgf), and magnetic flux density is between 3900 and 4100 Gauss, whereby the first magnetic attraction gap HI is between 0.1 and 0.8 mm, thereby ensuring that there are the first magnetic attraction gap HI between the magnetic attraction area 431 and a corresponding one of the magnetic members 50, and the second magnetic attraction gap H2 between the magnetic attraction area 431 and the slide seat cover 32. In addition, when the magnetic surface of each of the magnetic members is circular, the diameter of the magnetic surface is between 10 mm and 18 mm, the thickness of each of the magnetic members is 3 mm to 5 mm, which also ensures that there are the first magnetic attraction gap HI between the magnetic attraction area 431 and a corresponding one of the magnetic members 50, and the second magnetic attraction gap H2 between the magnetic attraction area 431 and the slide seat cover 32.

Secondly, the magnitudes of the first magnetic attraction gap HI and the second magnetic attraction gap H2 are related to the size of the magnetic attraction area, the magnetic attraction force, and the magnetic flux density of the magnetic members 50, thereby being applicable to linear modules of various dimensions and ensuring that there are the first magnetic attraction gap HI between the magnetic attraction area 431 and a corresponding one of the magnetic members 50, and the second magnetic gap H2 between the magnetic attraction area 431 and the slide seat cover 32.

While we have shown and described various embodiments in accordance with the present invention, it is clear to those skilled in the art that further embodiments may be made without departing from the scope of the present invention.

## Claims

1. A low dust linear module, comprising:
a rail unit (20) having a displacement direction (X);
a slide seat assembly (30) including a slide seat (31) and a slide seat cover (32), wherein the slide seat (31) is slidably disposed in the rail unit (20) along the displacement direction (X) and has two slide seat end portions (311) disposed along the displacement direction (X), the slide seat cover (32) being disposed on the slide seat (31);
a dustproof strip (40) including two end portions (42) fixed to the rail unit (20) and a magnetic attraction section (43) being disposed between the two end portions (42) and inserted between the slide seat (31) and the slide seat cover (32); and
a magnetic member (50) disposed on a side of the slide seat (31) facing the dustproof strip (40), wherein a portion of the magnetic attraction section (43) to be magnetically attracted by the magnetic member (50) is defined as a magnetic attraction area (431), a second magnetic attraction gap (H2) being defined between the magnetic attraction area (431) and the slide seat cover (32);
**characterized in that**
a first magnetic attraction gap (H1) is further defined between the magnetic attraction area (431) and the magnetic member (50).

2. The low dust linear module as claimed in claim 1, wherein a magnetic attraction force of each of the magnetic members (50) is between 22,6 and 54,9 N (2,3 and 5,6 kgf), a magnetic flux density is between 3900 and 4100 Gauss, a magnetic surface (51) of each of the magnetic members (50) has a rectangular shape, a length and a width of the magnetic surface (51) are between 10 mm×10 mm and 12 mm×12 mm, and the first magnetic attraction gap (H1) is between 0.1 and 0.8 mm.

3. The low dust linear module as claimed in claim 1, wherein a magnetic attraction force of each of the magnetic members (50) is between 22,6 N and 54,9 N (2,3 and 5,6 kgf), a magnetic flux density is between 3900 and 4100 Gauss, a magnetic surface (51) of each of the magnetic members (50) has a circular shape, a diameter of the magnetic surface (51) is between 10 mm and 18 mm, and a thickness of each of the magnetic members (50) is 3 mm to 5 mm.

4. The low dust linear module as claimed in claim 1, wherein the rail unit (20) includes a rail (21) and two side covers (22), the two side covers (22) are disposed at two sides of the rail (21), and each include a longitudinal portion (221) disposed at two sides of the rail (21) and a transverse portion (222) connected to the longitudinal portion (221), and a space (223) is defined between the two transverse portions (222) for receiving the dustproof strip.

5. The low dust linear module as claimed in claim 4, wherein each of the transverse portions (222) is provided with a support groove (2221), and a magnetic strip (23) is disposed in each of the support grooves (2221) to magnetically attract two sides of the magnetic attraction section (43) of the dustproof strip (40).

6. The low dust linear module as claimed in claim 1, wherein the slide seat (31) further includes an intermediate protrusion portion (312) disposed between the two slide seat end portions (311), and two slide seat side walls (313) formed on two sides of the intermediate protrusion portion (312), a slide seat groove (314) is defined between the two slide seat side walls (313), the magnetic attraction section (43) of the dustproof strip (40) is inserted through the slide seat groove (314), and a part of the magnetic attraction section (43) of the dustproof strip (40) inserted in the intermediate protrusion portion (312) protrudes upward.

7. The low dust linear module as claimed in claim 1, wherein there are two said magnetic members (50) which are respectively disposed at the two slide seat end portions (311) of the slide seat (31).

8. The low dust linear module as claimed in claim 4, wherein a top surface (51) of each of the magnetic members (50) is lower than a top surface of the transverse portion (222) of each of the side covers (22).

## Patentansprüche

1. Staubarmes Linearmodul, umfassend:
eine Schieneneinheit (20), die eine Verschiebungsrichtung (X) aufweist;
eine Gleitsitzanordnung (30), die einen Gleitsitz (31) und eine Gleitsitzabdeckung (32) beinhaltet, wobei der Gleitsitz (31) verschiebbar entlang der Verschiebungsrichtung (X) an der Schieneneinheit (20) angeordnet ist und zwei Gleitsitzendabschnitte (311) aufweist, die entlang der Verschiebungsrichtung (X) angeordnet sind, wobei die Gleitsitzabdeckung (32) an dem Gleitsitz (31) angeordnet ist,
einen staubdichten Streifen (40), der zwei Endabschnitte (42), die an der Schieneneinheit (20) befestigt sind, und einen magnetischen Anziehungsabschnitt (43) beinhaltet, der zwischen den zwei Endabschnitten (42) angeordnet ist und zwischen den Gleitsitz (31) und die Gleitsitzabdeckung (32) eingefügt ist, und
ein magnetisches Element (50), das an einer Seite des Gleitsitzes (31) angeordnet ist, die zu dem staubdichten Streifen (40) zeigt, wobei ein Abschnitt des magnetischen Anziehungsabschnitts (43), der von dem magnetischen Element (50) magnetisch angezogen werden soll, als eine magnetische Anziehungsfläche (431) definiert ist, wobei eine zweite magnetische Anziehungslücke (H2) zwischen dem magnetischen Anziehungsbereich (431) und der Gleitsitzabdeckung (32) definiert ist,
**dadurch gekennzeichnet, dass**
eine erste magnetische Anziehungslücke (H1) ferner zwischen dem magnetischen Anziehungsbereich (431) und dem magnetischen Element (50) definiert ist.

2. Staubarmes Linearmodul gemäß Anspruch 1, bei welchem eine magnetische Anziehungskraft von jedem der magnetischen Elemente (50) zwischen 22,6 N und 54,9 N (2,3 und 5,6 kgf) ist, eine magnetische Flussdichte zwischen 3900 und 4100 Gauss ist, eine magnetische Fläche (51) von jedem der magnetischen Elemente (50) eine rechteckige Form aufweist, eine Länge und eine Breite der magnetischen Fläche (51) zwischen 10 mm × 10 mm und 12 mm × 12 mm sind und die erste magnetische Anziehungslücke (H1) zwischen 0,1 und 0,8 mm ist.

3. Staubarmes Linearmodul gemäß Anspruch 1, bei welchem eine magnetische Anziehungskraft von jedem der magnetischen Elemente (50) zwischen 22,6 N und 54,9 N (2,3 und 5,6 kgf) ist, eine magnetische Flussdichte zwischen 3900 und 4100 Gauss ist, eine magnetische Fläche (51) von jedem der magnetischen Elemente (50) eine kreisförmige Form aufweist, ein Durchmesser der magnetischen Fläche (51) zwischen 10 mm und 18 mm ist und eine Dicke von jedem der magnetischen Elemente (50) 3 mm bis 5 mm ist.

4. Staubarmes Linearmodul gemäß Anspruch 1, bei welchem die Schieneneinheit (20) eine Schiene (21) und zwei Seitenabdeckungen (22) beinhaltet, wobei die zwei Seitenabdeckungen (22) an zwei Seiten der Schiene (21) angeordnet sind und jede einen longitudinalen Abschnitt (221), der an zwei Seiten der Schiene (21) angeordnet ist, und einen transversalen Abschnitt (222) beinhaltet, der mit dem longitudinalen Abschnitt (221) verbunden ist, und wobei ein Raum (223) zwischen den zwei transversalen Abschnitten (222) definiert ist, um den staubdichten Streifen aufzunehmen.

5. Staubarmes Linearmodul gemäß Anspruch 4, bei welchem jeder der transversalen Abschnitte (222) mit einer Stütznut (2221) versehen ist und ein magnetischer Streifen (23) in jeder der Stütznuten (2221) angeordnet ist, um zwei Seiten des magnetischen Anziehungsbereichs (43) des staubdichten Streifens (40) magnetisch anzuziehen.

6. Staubarmes Linearmodul gemäß Anspruch 1, bei welchem der Gleitsitz (31) ferner einen Zwischenvorsprung (312), der zwischen den zwei Gleitsitzendabschnitten (311) angeordnet ist, und zwei Gleitsitzseitenwände (313) beinhaltet, die an zwei Seiten des Zwischenvorsprungs (312) ausgebildet sind, wobei eine Gleitsitznut (314) zwischen den zwei Gleitsitzseitenwänden (313) definiert ist, wobei der magnetische Anziehungsbereich (43) des staubdichten Streifens (40) durch die Gleitsitznut (314) gesteckt ist und ein Teil des magnetischen Anziehungsbereichs (43) des staubdichten Streifens (40), der in den Zwischenvorsprung (312) gesteckt ist, nach oben vorsteht.

7. Staubarmes Linearmodul gemäß Anspruch 1, bei welchem zwei der magnetischen Elemente (50) vorliegen, die entsprechend an den zwei Gleitsitzendabschnitten (311) des Gleitsitzes (31) angeordnet sind.

8. Staubarmes Linearmodul gemäß Anspruch 4, bei welchem eine Oberseite (51) von jedem der magnetischen Elemente (50) niedriger ist als eine Oberseite des transversalen Abschnitts (222) von jeder der Seitenabdeckungen (22).

## Revendications

1. Module linéaire à faible poussière comprenant:
une unité de rail (20) présentant une direction de déplacement (X);
un ensemble de siège de coulissement (30) incluant un siège de coulissement (31) et un couvercle de siège de coulissement (32), dans lequel le siège de coulissement (31) est disposé de manière coulissante dans l'unité de rail (20) le long de la direction de déplacement (X) et présente deux portions d'extrémité de siège de coulissement (311) disposées le long de la direction de déplacement (X), le couvercle de siège de coulissement (32) étant disposé sur le siège de coulissement (31);
une bande étanche à la poussière (40) incluant deux portions d'extrémité (42) fixées à l'unité de rail (20) et une section d'attraction magnétique (43) étant disposée entre les deux portions d'extrémité (42) et insérée entre le siège de coulissement (31) et le couvercle de siège de coulissement (32); et
un élément magnétique (50) disposé sur un côté du siège de coulissement (31) tourné vers la bande étanche à la poussière (40), dans lequel une portion de la section d'attraction magnétique (43) à attirer magnétiquement par l'élément magnétique (50) est définie comme une zone d'attraction magnétique (431), une seconde fente d'attraction magnétique (H2) étant définie entre la zone d'attraction magnétique (431) et le couvercle de siège de coulissement (32);
**caractérisé en ce que**
une première fente d'attraction magnétique (H1) est en outre définie entre la zone d'attraction magnétique (431) et l'élément magnétique (50).

2. Module linéaire à faible poussière selon la revendication 1, dans lequel la force d'attraction magnétique de chacun des éléments magnétiques (50) est entre 22,6 N et 54,9 N (2,3 et 5,6 kgf), une densité de flux magnétique est entre 3 900 et 4 100 Gauss, une surface magnétique (51) de chacun des éléments magnétiques (50) présente une forme rectangulaire, une longueur et une largeur de la surface magnétique (51) sont entre 10 mm x 10 mm et 12 mm x 12 mm, et la première fente d'attraction magnétique (H1) est entre 0,1 et 0,8 mm.

3. Module linéaire à faible poussière selon la revendication 1, dans lequel une force d'attraction magnétique de chacun des éléments magnétiques (50) est entre 22,6 N et 54,9 N (2,3 et 5,6 kgf), une densité de flux magnétique est entre 3 900 et 4 100 Gauss, une surface magnétique (51) de chacun des éléments magnétiques (50) présente une forme circulaire, un diamètre de la surface magnétique (51) est entre 10 mm et 18 mm, et une épaisseur de chacun des éléments magnétiques (50) est de 3 mm à 5 mm.

4. Module linéaire à faible poussière selon la revendication 1, dans lequel l'unité de rail (20) inclut un rail (21) et deux couvercles latéraux (22), les deux couvercles latéraux (22) sont disposés au niveau de deux côtés du rail (21), et incluent chacun une portion longitudinale (221) disposée au niveau de deux côtés du rail (21) et une portion transversale (222) raccordée à la portion longitudinale (221), et un espace (223) est défini entre les deux portions transversales (222) pour la réception de la bande étanche à la poussière.

5. Module linéaire à faible poussière selon la revendication 4, dans lequel chacune des portions transversales (222) est dotée d'une rainure de support (2221), et une bande magnétique (23) est disposée dans chacune des rainures de support (2221) pour attirer magnétiquement deux côtés de la section d'attraction magnétique (43) de la bande étanche à la poussière (40).

6. Module linéaire à faible poussière selon la revendication 1, dans lequel le siège de coulissement (31) inclut en outre une portion de saillie intermédiaire (312) disposée entre les deux portions d'extrémité de siège de coulissement (311), et deux parois latérales de siège de coulissement (313) formées sur deux côtés de la portion de saillie intermédiaire (312), une rainure de siège de coulissement (314) est définie entre les deux parois latérales de siège de coulissement (313), la section d'attraction magnétique (43) de la bande étanche à la poussière (40) est insérée à travers la rainure de siège de coulissement (314), et une partie de la section d'attraction magnétique (43) de la bande étanche à la poussière (40) insérée dans la portion de saillie intermédiaire (312) fait saillie vers le haut.

7. Module linéaire à faible poussière selon la revendication 1, dans lequel il y a deux dits éléments magnétiques (50) qui sont disposés respectivement au niveau des deux portions d'extrémité de siège de coulissement (311) du siège de coulissement (31).

8. Module linéaire à faible poussière selon la revendication 4, dans lequel une surface supérieure (51) de chacun des éléments magnétiques (50) est inférieure à une surface supérieure de la portion transversale (222) de chacun des couvercles latéraux (22).
